# EUROPÄISCHE PATENTANMELDUNG

(11) **EP 3 617 663 A1**
(43) Veröffentlichungstag der Anmeldung: **04.03.2020**
(21) Anmeldenummer: 18191495.3
(22) Anmeldetag: 29.08.2018
(51) Int. Cl.: G01D 21/00

(54) **VERFAHREN ZUM VERIFIZIEREN VON SENSOREN EINES SENSORNETZWERKS UND SENSORNETZWERK**

(71) Anmelder: Siemens Aktiengesellschaft, 80333 München (DE)
(72) Erfinder: Guder, Jörn, 13405 Berlin (DE); Holst, Jens-Christian, 10711 Berlin (DE); Jaeger, Florian Ansgar, 10961 Berlin (DE); Kreft, Nicolas, 10707 Berlin (DE); Müller, Katrin, 10713 Berlin (DE)

(57) **Zusammenfassung**

Die Erfindung betrifft ein Verfahren zum Verifizieren von Sensoren in einem Sensornetzwerk. Dieses Sensornetzwerk besteht aus unterschiedlichen Sensoren, beispielsweise geeichten Sensoren (MS), mobilen Sensoren (MOS) und zu verifizierenden oder bereits verifizierten Sensoren (SEN), welche ortsfest sind. Erfindungsgemäß wird zur Verifikation ein bereits verifizierter Sensor als Referenzsensor herangezogen. Insbesondere kann es sich hierbei um einen geeichten Sensor (MS) handeln. Weitere Sensoren (SEN), deren Messabweichungen innerhalb bestimmter Toleranzbereiche liegen, können in das Sensornetzwerk aufgenommen werden, wie jeweils an einem Haken an den Sensoren (SEN) zum Ausdruck kommt. Allerdings können bei zu großen Abweichungen die Sensoren auch abgelehnt werden (angedeutet durch ein Kreuz). Erfindungsgemäß können vorteilhaft Sensoren unterschiedlicher Anbieter und Netzwerke miteinander gekoppelt werden, wodurch eine Vielzahl der zu Verfügung stehenden Sensoren beispielsweise für ein Managementsystem zur Luftreinhaltung zum Einsatz kommen können.

## Beschreibung

Die Erfindung betrifft ein Verfahren zum Verifizieren von Sensoren für ein Sensornetzwerk, wobei sich in dem Sensornetzwerk mindestens ein Referenzsensor befindet. Außerdem betrifft die Erfindung ein Sensornetzwerk, welches vorbereitet ist, um ein Verfahren zum Verifizieren dieser Sensoren zu ermöglichen. Weiterhin betrifft die Erfindung ein Computerprogrammprodukt sowie eine Bereitstellungsvorrichtung für ein solches Computerprogrammprodukt.

Es ist bekannt, dass Sensornetzwerke zum Beispiel verwendet werden, um Daten zur Luftqualität insbesondere in Ballungsräumen wie Großstädten zu erfassen. Es gibt beispielsweise eine offene Datenplattform im Internet www.luftdaten.info, mit deren Hilfe eine Kartierung von Daten möglich ist. Diese Daten werden von selbstgebauten beziehungsweise offiziell installierten Sensoren zur Verfügung gestellt. Hierbei handelt es sich um eine Initiative der Firma Büro für Gestalten/DE - natürlich Werben, die in Stuttgart angesiedelt ist. Die selbstgebauten Sensoren bestehen aus kostengünstig angebotenen Sensorbaukästen, die unter www.luftdaten.info erworben werden können. Damit stellt die Initiative eine Lösung dar, die darauf baut, dass möglichst viele Nutzer die Sensorbaukästen erwerben um ein möglichst flächendeckendes Netz an Sensoren zu erhalten. Die Güte des Sensornetzwerks ist damit vom Kaufverhalten der Nutzer abhängig. Hierin besteht aber auch ein Problem, da gerade in problematischen Luftverschmutzungszonen beispielsweise eher sozial schwächere Bewohner eines Ballungsgebietes wohnen, welche sich weniger mit den erforderlichen Investitionen engagieren können.

Ein weiteres Problem besteht darin, dass die Messgenauigkeit des genannten Sensornetzwerkes vom Anbieter als schwankend eingeschätzt wird. Daher besteht kein Anspruch auf eine besonders hohe Genauigkeit, wie der Anbieter selbst mitteilt. Die Auswertung der Daten durch Datenbanken und Algorithmen liefert daher keine besonders genauen Ergebnisse.

Weiterhin gibt es kommerzielle Anbieter, wie beispielsweise die Firma Hawa Dawa. Ein Netzwerk aus eigens entwickelten Schadstoffsensoren für Wetter- und Verkehrsdaten wird von dieser Firma angeboten. Eine entsprechende Investition kann daher flächendeckende Informationen über Luftqualität in Echtzeit erzeugen, allerdings ist diese Lösung davon abhängig, dass beispielsweise die Stadtverwaltung eines Ballungsraums größere Investitionen in dieses Netzwerk tätigt. Das hierfür erforderliche Budget steht häufig nicht zur Verfügung.

Zuletzt betreibt beispielsweise das Umweltbundesamt auch eine Anzahl von geeichten Messstationen. Das Umweltbundesamt arbeitet zu diesem Zweck mit den Landesregierungen zusammen. Allerdings ist die Dichte dieser Messstationen sehr gering, so dass Messwerte zwischen den Messstationen mathematisch interpoliert werden oder durch Modellrechnungen ermittelt werden. Diese Herangehensweise eignet sich zwar dafür, bundesweite Auswertungen zu fahren, jedoch ist es nicht möglich, die genaue Entwicklung der Luftqualität in Ballungsräumen damit lokal exakt zu messen oder vorherzusagen.

Die Aufgabe der Erfindung besteht darin, ein Sensornetzwerk zu Ermittlung der Luftqualität zur Verfügung zu stellen, welches einerseits kostengünstig in der Anschaffung ist beziehungsweise die Ressourcen optimal nutzt und andererseits Daten in genügender Qualität zur Verfügung stellt. Außerdem ist es Aufgabe der Erfindung ein Verfahren zum Verifizieren von Sensoren in einem solchen Sensornetzwerk anzugeben, mit dem es möglich ist, ein solches Netzwerk aufzubauen und/oder zu betreiben. Zuletzt ist es Aufgabe der Erfindung, ein Computerprogrammprodukt zur Verfügung zu stellen, mit dem das genannte Verfahren automatisiert durchgeführt werden kann. Diese Aufgabe wird mit dem eingangs angegebenen Anspruchsgegenstand erfindungsgemäß dadurch gelöst, dass bei dem Verfahren folgende Schritte durchlaufen werden:
- der Sensor wird identifiziert,
- es wird geprüft, ob der identifizierte Sensor (mobil oder stationär) registriert ist,
- nur wenn der identifizierte Sensor noch nicht registriert ist, wird dieser registriert,
- der identifizierte Sensor wird lokalisiert,
- ein mit dem identifizierten Sensor aufgenommener Messwert wird mit einem Messwert verglichen, der zeitgleich und innerhalb eines definierten räumlichen Umfeldes mit dem Referenzsensor aufgenommen wurde,
- eine Abweichung des Messwertes des identifizierten Sensors von Messwert des Referenzsensors wird ermittelt,
- abhängig von der Abweichung wird der Sensor genau einer von mindestens zwei Kategorien zugeordnet.

Das Verfahren ist damit vorteilhaft dazu geeignet, ein Verifizierungssystem zur Verfügung zu stellen, mit dem alle existierenden Sensoren unterschiedlicher Anbieter beziehungsweise unterschiedlicher Sensornetzwerke verifiziert werden können. Hierzu wird ein für das Verfahren ausgebildeter Standard verwendet, welcher, wie im Folgenden noch näher erläutert wird, die Verifizierung unterschiedlicher Sensoren ermöglicht. Der Algorithmus, der bei diesem Verfahren verwendet wird, prüft dabei ständig die genaue Position des zu verifizierenden Sensors. Dabei können ortsgebundene Sensoren und auch mobile Sensoren (beispielsweise in Fahrzeugen) in die Verifikation einbezogen werden. Ortsgebundene Sensoren weisen selbstverständlich immer dieselbe Position auf. Die mobilen Sensoren sind jedoch an unterschiedlichen Orten des Sensornetzwerkes zu lokalisieren und können dieses auch verlassen beziehungsweise in dieses Sensornetzwerk eintreten. Neben der Position des Sensors wird jeder Verifikationsdurchlauf (d.h. der oben beschriebene Vorgang) mit einem Zeitstempel versehen. Dies ist erforderlich, um eine zeitgleiche Messung zu bestätigen, sodass die Messwerte, wie oben angegeben, auch verglichen werden können. Verifizierte Sensoren gehören dann zum Sensornetzwerk und können Daten liefern, welche örtlich gebunden ermittelt werden und dadurch ein Profil der Luftqualität oder auch anderer über ein Sensornetzwerk zu ermittelnder Kriterien ermöglicht (beispielsweise wäre auch ein Sensornetzwerk zur Ermittlung einer Wasserqualität in einem Gewässer oder einem Gewässersystem denkbar).

Die Entscheidung, ob ein Sensor in das Sensornetzwerk aufgenommen werden kann, wird somit dadurch unterstützt, dass bereits verifizierte Sensoren durch zeitgleiche Messungen herangezogen werden, um die Qualität eines neuen Sensors zu beurteilen. Zu diesem Zweck werden die gemessenen Daten klassifiziert. Es können, wie im Folgenden noch näher erläutert wird, unterschiedliche Klassen von Sensoren eingeteilt werden. In jedem Fall gibt es eine Sensorklasse "geeignet" (d.h. die Genauigkeit ist für die Zwecke des Sensornetzwerkes ausreichend) und eine Kategorie "ungenügend" (d.h., dass dieser Sensor nicht in das Sensornetzwerk aufgenommen werden kann, jedoch - entweder zu einem späteren Zeitpunkt noch einmal überprüft werden kann - oder endgültig aus dem Sensornetzwerk ausgeschlossen wird).

Gemäß einer Ausgestaltung der Erfindung ist vorgesehen, dass mindestens zwei der folgenden Sensorkategorien zur Kategorisierung der Sensoren vorgesehen sind:
- Kategorie 1 bedeutet, dass die Genauigkeit des identifizierten Sensors zur Verifizierung anderer Sensoren ausreichend ist,
- Kategorie 2 bedeutet, dass die Genauigkeit des identifizierten Sensors zur Verwendung der Messwerte für eine Datenverarbeitung ausreichend ist,
- Kategorie 3 bedeutet, dass der Sensor eine zu geringe Genauigkeit aufweist, wobei diese zum späteren Zeitpunkt noch einmal überprüft werden kann,
- Kategorie 4 bedeutet, dass der Sensor eine zu geringe Genauigkeit aufweist, um in dem Verfahren noch einmal geprüft zu werden.

Hiermit wird vorteilhaft ein universelles Kategorisierungsprinzip zur Verfügung gestellt, wobei dieses durch weitere Kategorien ergänzt werden kann. Die Kategorie 1 bedeutet, dass der Sensor so genau ist, dass dieser zur Verifizierung anderer Sensoren eine genügende Genauigkeit liefert. Diese Genauigkeit muss höher sein, als die Genauigkeit, die zum Liefern von Messwerten zur Beurteilung der Luftqualität erforderlich ist. Ansonsten ließe sich die Genauigkeit der zu verifizierenden Sensoren nicht mit genügender Zuverlässigkeit ermitteln.

Die Kategorie 2 bedeutet, dass der verifizierte Sensor in Zukunft zumindest zur Ermittlung von Messwerten des Sensornetzwerkes herangezogen werden kann. Allerdings reicht die Genauigkeit nicht aus, um genügend zuverlässig weitere Sensoren zu verifizieren, die noch nicht in das Sensornetzwerk aufgenommen wurden.

Die Kategorie 3 bedeutet, dass ein Sensor zwar aus dem zulässigen Toleranzbereich herausfällt, aufgrund der Messfehler beziehungsweise der Messsituation jedoch nicht auszuschließen ist, dass die Qualität des Sensors ausreichen könnte. Deswegen kann dieser zu einem späteren Zeitpunkt noch einmal untersucht werden.

Die Kategorie 4 bedeutet, dass die Abweichungen so groß sind, dass ausgeschlossen werden kann, dass die Genauigkeit zur Aufnahme der gewünschten Daten ausreicht. Dieser Sensor kann dann sozusagen endgültig aussortiert werden. Da alle Sensoren, die einmal in dem Sensornetzwerk oder für das Sensornetzwerk identifiziert wurden, wiedererkannt werden, wird ein Sensor der Kategorie 4 nicht noch einmal verifiziert. Dies hat den Vorteil, dass die im Verifikationsverfahren auf diesem Weg effizienter erfolgen können, da unnötige Doppelmessungen vermieden werden.

Die Daten der Kategorie 1 sowie der Kategorie 2 können zu Auswertungen herangezogen werden. Handelt es sich um ein Sensornetzwerk zur Ermittlung der Luftqualität (oder Wasserqualität) können diese Daten beispielsweise für einen Informationsdienst zur Verfügung gestellt werden. Dieser Informationsdienst kann Gesundheitsinformationen weitergeben. Beispielsweise, dass Menschen mit Atemproblemen bei einer zu hohen Ozonbelastung bestimmte Bereiche des Ballungsgebietes meiden oder dass bestimmte Badeseen zum Schwimmen gesperrt werden. Die Informationen können auch für eine Verkehrsleitung verwendet werden. Beispielsweise können Straßen mit zu hoher Stickstoffbelastung durch eine Verkehrsleitung entlastet werden. Auf diesem Weg ist ein Luftqualitätsmanagement möglich, welches durch das Sensornetzwerk unterstützt wird.

Gemäß einer Ausgestaltung der Erfindung ist vorgesehen, dass Sensoren, denen die Kategorie 3 zugeordnet wurde, in Zeitabständen einer erneuten Prüfung unterworfen werden, indem mit diesen Sensoren aufgenommene Messwerte mit einem Messwert verglichen werden, der zeitgleich und innerhalb eines definierten räumlichen Umfeldes mit dem Referenzsensor (zum Beispiel einem verifizierten Sensor der Kategorie 1 oder einem geeichten Sensor) aufgenommen wurde.

Anders als die Sensoren der Kategorie 4, welche endgültig aus dem Sensornetzwerk ausgeschlossen wurden, kann bei der Kategorie 3 eine Prüfung erfolgen, ob diese Sensoren im Allgemeinen eine genügende Genauigkeit aufweisen und die Messung, die zur Einstufung in Kategorie 3 geführt hat, nur ein Ausreißer war. Wenn jedoch wiederholte Messungen beispielsweise 3, 5 oder 10 Messungen konstant zu einer Vergabe der Kategorie 3 geführt haben, kann auch ein solcher Sensor endgültig aus dem Sensornetzwerk ausgeschlossen werden. Auch wenn nur ein einziges Mal eine Messung zur Zuordnung von Kategorie 4 führt, kann der Sensor endgültig aus dem Sensornetzwerk ausgeschlossen werden.

Auch ist es möglich, dass Sensoren der Kategorie 1 und/oder 2 in regelmäßigen Abständen wieder einer Prüfung unterworfen werden. Hierdurch können beispielsweise alterungsbedingte Qualitätsverschlechterungen der Sensoren ermittelt werden weswegen es erforderlich werden kann, auch zu einem späteren Zeitpunkt verifizierte Sensoren einer anderen Kategorie zuzuordnen und diese im schlimmsten Fall aus dem Sensornetzwerk auszuschließen.

Gemäß einer Ausgestaltung der Erfindung ist vorgesehen, dass jeder Messwert des identifizierten Sensors und/oder des Referenzsensors mit einem Messzeitpunkt versehen wird.

Hiermit ist gemeint, dass der Messzeitpunkt nicht nur zur Verifikation der Sensoren verwendet wird, sondern auch die Sensordaten, die später einer Auswertung beispielsweise zur Ermittlung der Luftqualität unterworfen werden, eindeutig mit dem Messzeitpunkt sozusagen als Zeitstempel versehen sind. Dies erleichtert spätere Auswertungen der Messwerte, weil diese auch mit der zugehörigen Messzeit archiviert werden können. Eine Alternative hierzu ist die Abspeicherung aller Sensordaten des Netzwerkes beispielsweise in einer Datenbank, in der der Speicherzeitpunkt mit abgespeichert wird.

Gemäß einer Ausgestaltung der Erfindung ist vorgesehen, dass als Referenzsensoren geeichte Sensoren verwendet werden.

Wenn in einem Sensornetzwerk geeichte Sensoren zur Verfügung stehen, sind diese für die Genauigkeit des Sensornetzwerkes von besonderer Bedeutung. Diese müssen daher auch nicht der Verifikationsprozedur unterworfen werden, da geeichte Sensoren eine für den Messzweck ausreichende Genauigkeit aufweisen und diese durch das Eichamt auch regelmäßig bestätigt wird. Selbstverständlich ist es aber auch möglich, diese Sensoren zu verifizieren, wenn das Verifikationsverfahren hier keine Unterscheidung trifft, da geeichte Sensoren des Verifikationsverfahrens immer mit Kategorie 1 durchlaufen werden. Wenn geeichte Sensoren allerdings im Rahmen der Identifikation schon als solche erkannt werden können, kann der Verifikationsprozess auch abgekürzt werden, indem diesen Sensoren sogleich die Kategorie 1 zugeordnet wird.

Geeichte Sensoren sind auch in besonderem Maße dafür geeignet, um bereits verifizierte Sensoren in regelmäßigen Abständen einer Prüfung zu unterziehen, ob diese für ihre Aufgabe noch genau genug arbeiten. Diese regelmäßigen Untersuchungen ersetzten für die verifizierten Sensoren dann den Eichprozess, den die geeichten Sensoren von Amtsseite regelmäßig durchlaufen müssen.

Gemäß einer Ausgestaltung der Erfindung ist vorgesehen, dass als Referenzsensoren mobile Sensoren verwendet werden, wobei diese zur Verifizierung von Sensoren verwendet werden, welche während einer Bewegung der mobilen Sensoren in das räumliche Umfeld derselben gelangen. Natürlich funktioniert das Prinzip auch andersherum. Dies bedeutet, dass die Referenzsensoren ortsfest sind und ein zu verifizieren Sensoren mobil, zum Beispiel auf einem Automobil installiert. Dieses kann während seiner Vorbeifahrt durch den ortsfesten Referenzsensor verifiziert werden.

Diese Ausgestaltung der Erfindung macht deutlich, welchen Stellenwert die mobilen Sensoren in dem Netzwerk von Sensoren aufweisen. Diese ermöglichen es nämlich, dass auch Sensornetzwerke, bei denen die Sensordichte noch nicht so hoch ist, dass alle Sensoren im Bereich eines verifizierten Sensors liegen, verifiziert werden können. Werden mobile Sensoren in Kategorie 1 verifiziert, können diese durch die Bewegung innerhalb des Sensornetzwerkes nämlich dazu beitragen, dass Sensoren verifiziert werden können, die so weit von anderen bereits verifizierten Sensoren entfernt sind, dass eine Verifikation ansonsten nicht möglich wäre. Hintergrund der Problematik ist in dem Sensornetzwerk nämlich, dass eine Verifikation nur möglich ist, wenn die Sensoren jeweils innerhalb eines räumlich definierten Umfeldes liegen. Damit ist gemeint, dass ein Vergleich der Messwerte nur dann möglich ist, wenn dieselben oder zumindest sehr ähnlichen Messbedingungen vorliegen. Ansonsten könnten Abweichungen der Messwerte an tatsächlich unterschiedlichen Messbedingungen liegen, sodass ein Messfehler nicht erkannt werden könnte bzw. ein Fehler identifiziert wird, obwohl es an den unterschiedlichen Messbedingungen lag.

Die Definition eines räumlichen Umfeldes kann im einfachsten Falle so erfolgen, dass das Umfeld kreisförmig mit einem bestimmten Radius den Sensor umgibt. In diesem Falle könnte eine Verifikation neuer Sensoren nur erfolgen, wenn die Entfernung des zu verifizierenden (identifizierten) Sensors und des Referenzsensors kleiner als der Radius des räumlichen Umfeldes ist.

Eine andere Möglichkeit besteht darin, dass als räumliche Umfelder Zellen variabler Größe (Fläche) und Kontur (Form) definiert werden (ähnlich wie die Zellen eines Mobilfunknetzes). Hierbei können Besonderheiten berücksichtigt werden, die mit dem Ballungsgebiet zusammenhängen. Beispielsweise ist es in Innenstädten mit enger Bebauung eventuell notwendig, ein engmaschigeres Netz von Zellen aufzubauen. Häuser trennen vielleicht Parks von Straßengebieten, sodass im Park und auf der Straße unterschiedliche Bedingungen herrschen, obwohl diese Gebiete sehr nah beieinander liegen. In weniger dicht besiedelten Gebieten, zum Beispiel in einem Stadtwald herrschen vielleicht konstante Bedingungen, sodass die Zelle sehr viel größer sein könnte.

Gemäß einer Ausgestaltung der Erfindung ist vorgesehen, dass der Referenzsensor in einem Verkehrsmittel lokalisiert ist.

Die Lokalisierung des Sensors in einem Verkehrsmittel ermöglicht vorteilhaft die Messung in Ballungsräumen gerade dort, wo Luftverschmutzungen besonders kritisch sein können (beispielsweise Stickoxidbelastungen auf verkehrsreichen Straßen). Damit lassen sich vorteilhaft mit den mobilen Sensoren diese Bereiche besonders gut überwachen. Außerdem sind die Verkehrsmittel ständig unterwegs (beispielsweise öffentliche Verkehrsmittel wie Busse) sodass es auch leicht möglich ist, in dem Sensornetzwerk immer neue Sensoren zu verifizieren.

Gemäß einer Ausgestaltung der Erfindung ist vorgesehen, dass der Weg des in dem Verkehrsmittel lokalisierten Referenzsensors verfolgt wird.

Wenn der Weg des Verkehrsmittels mit dem lokalisierten Referenzsensor verfolgt wird, kann diese örtliche Änderung mit der zeitlichen Änderung der Aufnahme der Messwerte korreliert werden. Es wird hierbei zum Beispiel auch möglich die Entwicklung der Luftqualität im morgendlichen Berufsverkehr zu ermitteln. Beispielsweise wie die Atembelastung für einen Radfahrer steigt, wenn dieser aus einem grünen Außenbezirk in die von Stau geplagte Innenstadt fährt. Vorteilhaft lassen sich daher vorteilhaft auch zusätzliche Daten ermitteln, die insbesondere sehr anschauliche Messergebnisse liefern.

Die Aufgabe wird alternativ mit dem eingangs angegebenen Anspruchsgegenstand (Sensornetzwerk) erfindungsgemäß auch dadurch gelöst, dass das Sensornetzwerk mit einer Anlage zur Datenverarbeitung gekoppelt ist, wobei die Anlage zur Datenverarbeitung zur Durchführung des Verfahrens gemäß einem der voranstehenden Ansprüche ausgebildet ist.

Selbstverständlich profitiert ein Netzwerk von Sensoren beispielsweise zur Ermittlung der Luftqualität von dem Verfahren, welches oben bereits genauer erläutert wurde. Ein mit diesem Verfahren arbeitendes Sensornetzwerk ist somit auch dazu geeignet, die oben angegebene Aufgabe zu lösen. Die Vorteile, die mit diesem Verfahren verbunden sind, sind oben bereits erläutert worden.

Ein Sensornetzwerk, welches mittels des oben angegebenen Verfahrens betrieben wird, muss daher mit einem Computer ausgestattet sein, welcher die Algorithmen des oben angegebenen Verfahrens ausführen kann. Dieser Computer weist neben einer Sende- und Empfangsschnittstelle für die Sensoren auch eine Datenbank auf, in der die Sensorwerte abgelegt werden können. Außerdem läuft in dem Computer ein Programm ab, welches die Steuerung des Verfahrens in der oben beschriebenen Weise übernimmt. Ein solches Programm (Computerprogrammprodukt) wird im Folgenden näher erläutert.

Gemäß einer Ausgestaltung der Erfindung ist vorgesehen, dass dieses Sensornetzwerk in einem Ballungsgebiet, insbesondere einer Stadt, installiert ist.

Gemäß einer Ausgestaltung der Erfindung ist vorgesehen, dass mit den Sensoren die Luftqualität messbar ist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird.

Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Prozessor handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Unter einer "Speichereinheit" kann im Zusammenhang mit der Erfindung beispielsweise ein computerlesbarer Speicher in Form eines Arbeitsspeichers (engl. Random-Access Memory, RAM) oder einer Festplatte verstanden werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
Figur 1 und 2 Ausführungsbeispiele eines Sensornetzwerkes, wobei diese idealisiert als Karte dargestellt sind und in den Figuren 1 und 2 unterschiedliche Stadien des Ablaufes eines Ausführungsbeispiels des erfindungsgemäßen Verfahrens dargestellt sind,
Figur 3 ein Ausführungsbeispiel des erfindungsgemäßen Verfahrens als Ablaufdiagramm,
Figur 4 ein Ausführungsbeispiel des erfindungsgemäßen Sensornetzwerks mit einer zentralen Recheneinheit als Blockschaltbild.

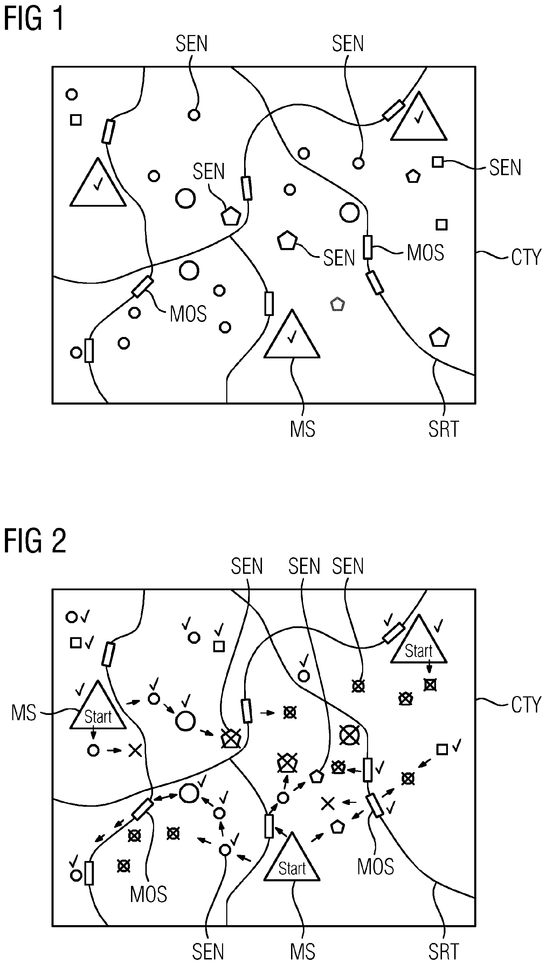

In Figur 1 ist ein Ballungsgebiet in Form einer Stadt CTY dargestellt. In diesem Ballungsgebiet gibt es Wege in Form von Straßen SRT, die das Ballungsgebiet als Netz durchlaufen. Auf den Straßen können mobile Sensoren MOS unterwegs sein, die beispielsweise den Fahrzeugen des öffentlichen Nahverkehrs oder auch in privaten Personenkraftwagen untergebracht sein können. Außerdem gibt es geeichte Sensoren MS welche durch eine Eichinstitution von staatlicher Seite in regelmäßigen Abständen überprüft werden. Damit ist sichergestellt, dass die geeichten Sensoren MS den Genauigkeitsanforderungen der durchzuführenden Messungen auf jeden Fall entsprechen.

Außerdem gibt es verschiedene Sensoren SEN, welche unterschiedlichen Anbietern oder anderweitigen Organisationen angehören, wie dies eingangs zum Stand der Technik bereits erläutert wurde. Diese Sensoren sind durch geometrische Figuren dargestellt, und zwar durch Kreise, Quadrate und Fünfecke. Hierdurch soll zum Ausdruck gebracht werden, dass diese unterschiedlichen Gruppierungen angehören. So können beispielsweise alle Kreise Sensoren darstellen, die durch eine Opensource Internetplattform angeboten werden.

Dies ist bereits eingangs erläutert worden. Es kann sich hierbei um Selbstbausensoren handeln, die in einem Netzwerk zusammengefasst werden. Weitere Sensoren können zum Beispiel kommerzielle Sensoren sein, welche beispielsweise durch ein Carsharing Unternehmen oder ein Mietwagenunternehmen (Quadrate) oder ein Taxiunternehmen (Fünfecke) betrieben werden. Die genannten Unternehmen können beispielsweise für den Betrieb der Sensoren entlohnt werden, um eine Motivation für die Aufnahme von Messwerten zu schaffen.

Am Anfang sind lediglich die geeichten Sensoren MS verifiziert, um in dem erfindungsgemäßen Sensornetzwerk zum Einsatz zu kommen. Dies ist dadurch angedeutet, dass die geeichten Sensoren MS mit einem Haken versehen sind.

Der Figur 2 lässt sich entnehmen, wie durch das erfindungsgemäße Verfahren in dem erfindungsgemäßen Sensornetzwerk nach und nach eine immer größere Anzahl von Sensoren SEN überprüft wird. Ausgangspunkt sind, wie bereits erwähnt, die geeichten Sensoren MS, weswegen diese in Figur 2 auch mit dem Wort "Start" gekennzeichnet sind. Wie durch Pfeile in Figur 2 angedeutet, ist es möglich, ausgehend von den geeichten Sensoren MS jeweils benachbarte Sensoren SEN oder auch mobile Sensoren MOS zu verifizieren, wenn diese sich gerade in dem räumlichen Einzugsgebiet eines solchen geeichten Sensors MS befinden. Auf diesem Wege werden sowohl stationäre Sensoren SEN in der Nachbarschaft der geeichten Sensoren verifiziert wie auch mobile Sensoren MOS, wenn diese auf einer Straße SRT in der Nähe eines geeichten (oder bereits verifizierten) Sensors entlangfahren. Jeweilige Verifikationen von Sensoren SEN sowie mobilen Sensoren MOS werden ebenfalls durch einen Haken angezeigt. Die Reihenfolge der Verifikationen lässt sich an Hand der Pfeile nachvollziehen.

Sollte der zu verifizierende Sensor jedoch die geforderte Messgenauigkeit nicht erreichen, so wird dieser aus dem Sensornetzwerk ausgeschlossen. Dies ist durch ein Kreuz in Figur 2 dargestellt.

Allerdings befinden sich nicht alle Sensoren SEN im Einzugsbereich eines geeichten Sensors MS. Um nach und nach das komplette Sensornetzwerk zu erschließen, werden daher die bereits verifizierten mobilen Sensoren MOS verwendet, welche auf den Straßen SRT bewegt werden und auf diese Weise auch an Sensoren SEN vorbeikommen, die nicht im Einzugsbereich eines geeichten Sensors MS liegen. Während der Vorbeifahrt können dann weitere Sensoren des Sensornetzwerks verifiziert werden. Dabei dienen die mobilen Sensoren MOS sozusagen als Vehikel zur Verbreitung von verifizierten Sensoren SEN.

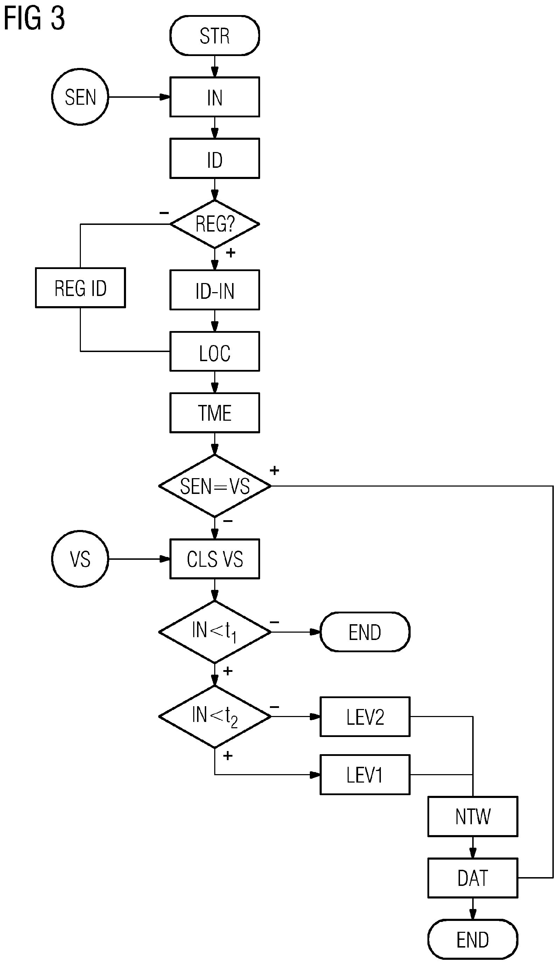

Den Ablauf einer Verifikationsprozedur kann man Figur 3 entnehmen. Nach einem Start STR erfolgt durch einen Sensor SEN, der in Reichweite eines verifizierten Sensors VS gelangt, zunächst ein Input IN eines Messwertes. Dieser Input wird beispielsweise über eine kabellose Schnittstelle, beispielsweise einer Antenne gesendet. Im Sensornetzwerk erfolgt daraufhin eine Identifikation ID, wobei diese im Rahmen einer Abfrage dazu führen kann, dass der Sensor als bereits registrierter Sensor erkannt wird. In dem Schritt REG? Wird im positiven Falle, also im Falle eines Erkennens des bereits registrierten Sensors aufgrund seiner ID der gemessene Wert des Inputs IN mit der ID im Schritt ID-IN korreliert. Für den Fall, dass die Abfrage nach einer Registrierung REG? negativ ausfällt, wird die Registrierung des Sensors im Schritt REG ID erstmalig durchgeführt. In jedem Fall erfolgt anschließend im Schritt LOC eine Lokalisation des zu verifizierenden Sensors SEN. Außerdem wird zusätzlich zur Aufnahme des Messwertes als Input IN ein Zeitstempel, d.h. ein Zahlenwert für die Zeit in einem Schritt TME abgespeichert, wobei diese Zeit demjenigen Zeitpunkt entspricht, indem der Sensor SEN den Input IN geliefert hat.

In einem nächsten Schritt SEN = VS kann abgefragt werden, ob es sich bei dem Sensor SEN bereits um einen verifizierten Sensor handelt. Im positiven Falle kann der Messwert IN, dessen Tauglichkeit in vorherigen Verfahrensdurchläufen bereits bestätigt wurde, direkt einer Datenbank DAT zugeführt werden, um für eine Weiterverarbeitung der Messwerte zur Verfügung zu stehen. Nur wenn die Abfrage SEN = VS negativ ausfällt, d.h. der Sensor noch nicht verifiziert wurde, wird das weitere Verfahren durchlaufen.

Das weitere Verfahren besteht darin, dass für den Sensor SEN der nächste verifizierte Sensor VS in einem Schritt CLS VS ermittelt wird. Dabei ist es Voraussetzung, dass der verifizierte Sensor VS sich in dem definierten Umkreis des Sensors SEN befindet, damit eine Vergleichbarkeit des gemessenen Wertes des Sensors SEN (IN) mit einem Vergleichsmesswert des Sensors VS realistisch ist.

Wurde ein verifizierter Sensor VS gefunden, wird dieser als Referenzsensor verwendet, um den Referenzwert mit dem Messwert IN zu vergleichen. Liegt der Messwert IN bezüglich dessen Referenzmesswertes innerhalb einer großen Toleranz t₁ so wird dieser zwecks einer Kategorisierung weiter untersucht. Nur wenn der Messwert IN außerhalb dieser Toleranz liegt wird der Sensor SEN für eine Aufnahme desselben in das Sensornetzwerk verworfen und der Verifikationsprozess wird gestoppt (in einem Schritt END). Ebenso wird der Messwert verworfen, der bei einer Auswertung der Messwerte zu falschen Ergebnissen führen könnte, da diese nicht durch einen autorisierten Sensor aufgenommen wurde.

Im Falle einer weiteren Kategorisierung wird eine weitere Abfrage gestartet, ob der Messwert IN des Sensors SEN innerhalb einer feineren Toleranz t₂ liegt. Ist dies der Fall, wird der Sensor SEN als Level 1 Sensor LEV1 kategorisiert und kann infolge dessen in Zukunft als Referenzsensor für weitere Durchläufe des oben beschriebenen Verfahrens dienen. Wird die engere Toleranz t₂ verlassen, wird der Sensor SEN als Level 2 Sensor LEV2 verifiziert. Dieser Sensor wird nicht für die Verifikation weiterer Sensoren SEN verwendet, soll mit anderen Worten also nicht als Referenzsensor dienen. Allerdings sind die erzeugten Messwerte genau genug, um einer Datenverarbeitung der Messwerte zugeführt zu werden. In beiden Fällen werden Level 1 Sensoren LEV1 sowie Level 2 Sensoren LEV2 dem Sensornetzwerk NTW zugeordnet, wobei der Funktionsumfang vom ermittelten Level abhängt. Der Messwert IN, der den Verifikationsprozess eingeleitet hat, kann in der Datenbank DAT abgespeichert werden, bevor der Verifikationsdurchlauf zu seinem Ende END gelangt.

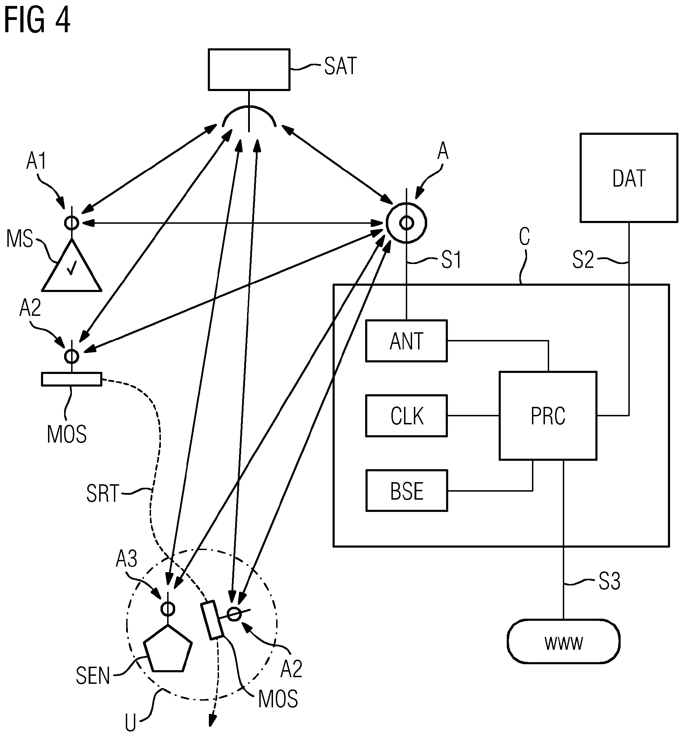

In Figur 4 ist ein Computer C dargestellt, der als Zentrale Recheneinheit für das Sensornetzwerk (repräsentativ dargestellt durch die Sensoren SEN, MOS und MS) zum Einsatz kommt. Der Computer weist einen Prozessor PRC auf, der zunächst zumindest ein Antennenmodul ANT und eine Uhr CLK ansteuert. Diese Module sind als Teil des Computers ausgebildet.

Weitere für das Verfahren relevante Elemente sind gemäß Figur 4 extern ausgebildet, wobei diese auch intern als Teil des Computers realisiert sein können. Das Antennenmodul ANT ist mit einer Antenne A über eine Schnittstelle S1 verbunden. Außerdem kommuniziert der Prozessor PRC über eine Schnittstelle S2 mit einer externen Datenbank DAT. Diese kann auch als interner Speicher im Computer C vorgesehen werden (in Figur 4 jedoch nicht dargestellt). Außerdem existiert eine Schnittstelle S3 mit dem Internet www, um beispielsweise an aktuelle Wetterdaten zu gelangen, die bei der Berechnung im Folgenden den Ausschlag geben können.

An dieser Stelle sei bemerkt, dass anstelle eines Antennenmoduls in nicht dargestellter Weise auch andere Sende- und Empfangsmodule zum Einsatz kommen können. Beispielsweise ist es möglich, eine Schnittstelle zum Austausch von Informationen über eine Infrarot-Schnittstelle oder eine Laserschnittstelle zu realisieren.

Über die Antenne A kann der Computer C auch Kontakt zu einer weiteren Antenne A1 des geeichten Sensors MS, einer Antenne A2 eines mobilen Sensors MOS oder einer Antenne A3 eines stationären Sensors SEN des Sensornetzwerks aufnehmen. Die besagten Antennen A1, A2, A3 sind außerdem dazu ausgelegt, eine Verbindung mit einem Satelliten SAT aufzunehmen, damit dieser beispielsweise die GPS Koordinaten senden und somit die Lokalisation der Sensoren ermöglichen kann. Die Kommunikation der beschriebenen Einzelkomponenten ist in Figur 4 durch Doppelpfeile dargestellt. Gleichzeitig kann sich die Lokalisierung der mobilen Sensoren MOS ändern, wie dies in Figur 4 dargestellt ist, wenn die mobilen Sensoren MOS beispielsweise auf einer Straße SRT des Ballungsraums unterwegs sind.

Der Figur 4 kann ebenso entnommen werden, dass Sensoren SEN, die verifiziert werden sollen, in einem definierten Umfeld U (nicht dargestellt) liegen müssen, damit ein Vergleich der durch den Sensor SEN und durch den mobilen Sensor MOS aufgenommenen Daten gegeben ist. In Figur 4 ist dieser definierte Einflussbereich als Kreis dargestellt, in dessen Mitte der mobile Sensor MOS liegt. Alternativ (nicht dargestellt) kann jedoch ein Gebiet (vergleiche Figuren 1 und 2) auch in verschiedene Zellen aufgeteilt werden (ähnlich wie beim Mobilfunknetz).

### Bezugszeichenliste

- CTY: Stadt
- SRT: Straße
- MOS: mobiler Sensor
- MS: geeichter Sensor
- SEN: Sensor
- STR: Start
- VS: verifizierter Sensor
- IN: Input
- ID: Identifikation
- DAT: Datenbank
- LEV1: Level 1 Sensor
- LEV2: Level 2 Sensor
- NTW: Sensornetzwerk
- END: Ende
- C: Computer
- PRC: Prozessor
- ANT: Antennenmodul
- CLK: Uhr
- A: Antenne
- A1: Antenne
- A2: Antenne
- A3: Antenne
- S1: Schnittstelle
- S2: Schnittstelle
- S3: Schnittstelle
- www: Internet
- SAT: Satellit
- U: Umfeld

## Patentansprüche

1. Verfahren zum Verifizieren von Sensoren (SEN) für ein Sensornetzwerk (NTW), wobei sich in dem Sensornetzwerk (NTW) mindestens ein Referenzsensor befindet,
**dadurch gekennzeichnet,**
**dass** bei dem Verfahren folgende Schritte durchlaufen werden
• der Sensor (SEN) wird identifiziert,
• es wird geprüft, ob der identifizierte Sensor (SEN) registriert ist,
• nur wenn der identifizierte Sensor noch nicht registriert ist, wird dieser registriert,
• der identifizierte Sensor wird lokalisiert,
• ein mit dem identifizierten Sensor aufgenommener Messwert wird mit einem Messwert verglichen, der zeitgleich und innerhalb eines definierten räumlichen Umfeldes mit dem Referenzsensor aufgenommen wurde,
• eine Abweichung des Messwertes des identifizierten Sensors von Messwert des Referenzsensors wird ermittelt,
• abhängig von der Abweichung wird der Sensor (SEN) genau einer von mindestens zwei Kategorien zugeordnet.

2. Verfahren nach Anspruch 1
**dadurch gekennzeichnet,**
**dass** mindestens zwei der folgenden Sensorkategorien zur Kategorisierung der Sensoren (SEN) vorgesehen sind:
• Kategorie 1 bedeutet, dass die Genauigkeit des Sensors (SEN) zur Verifizierung anderer Sensoren ausreichend ist,
• Kategorie 2 bedeutet, dass die Genauigkeit das in Sensors (SEN) zur Verwendung der Messwerte für eine Datenverarbeitung ausreichend ist,
• Kategorie 3 bedeutet, dass der Sensor (SEN) eine zu geringe Genauigkeit aufweist, wobei diese zum späteren Zeitpunkt noch einmal überprüft werden kann,
• Kategorie 4 bedeutet, dass der Sensor (SEN) eine zu geringe Genauigkeit aufweist, um in dem Verfahren noch einmal geprüft zu werden.

3. Verfahren nach Anspruch 2,
**dadurch gekennzeichnet,**
**dass** Sensoren, denen die Kategorie 3 zugeordnet wurde, in Zeitabständen einer erneuten Prüfung unterworfen werden, indem mit diesen Sensoren (SEN) aufgenommene Messwerte mit einem Messwert verglichen werden, der zeitgleich und innerhalb eines definierten räumlichen Umfeldes mit dem Referenzsensor aufgenommen wurde.

4. Verfahren nach einem der voranstehenden Ansprüche,
**dadurch gekennzeichnet,**
**dass** jeder Messwert des identifizierten Sensors (SEN) und/oder des Referenzsensors mit einem Messzeitpunkt versehen wird.

5. Verfahren nach einem der voranstehenden Ansprüche,
**dadurch gekennzeichnet,**
**dass** als Referenzsensoren geeichte Sensoren (MS) verwendet werden.

6. Verfahren einem der voranstehenden Ansprüche,
**dadurch gekennzeichnet,**
**dass** als Referenzsensoren mobile Sensoren (MOS) verwendet werden, wobei diese zur Verifizierung von Sensoren (SEN) verwendet werden, welche während einer Bewegung der mobilen Sensoren (MOS) in das räumliche Umfeld (U) derselben gelangen.

7. Verfahren nach Anspruch 6,
**dadurch gekennzeichnet,**
**dass** der Referenzsensor in einem Verkehrsmittel lokalisiert ist.

8. Verfahren nach Anspruch 7,
**dadurch gekennzeichnet,**
**dass** der Weg des in dem Verkehrsmittel lokalisierten Referenzsensors verfolgt wird.

9. Sensornetzwerk (NTW) mit einer Vielzahl von Sensoren (SEN),
**dadurch gekennzeichnet,**
**dass** dieses mit einer Anlage zur Datenverarbeitung, insbesondere einem Computer (C) gekoppelt ist, wobei die Anlage zur Datenverarbeitung zur Durchführung des Verfahrens gemäß einem der voranstehenden Ansprüche ausgebildet ist.

10. Sensornetzwerk (NTW) nach Anspruch 9,
**dadurch gekennzeichnet,**
**dass** dieses in einem Gebiet, insbesondere einer Stadt (CTY), installiert ist.

11. Sensornetzwerk (NTW) nach einem der Ansprüche 9 oder 10,
**dadurch gekennzeichnet,**
**dass** mit den Sensoren (SEN) die Luftqualität messbar ist.

12. Computerprogrammprodukt mit Programmbefehlen zur Durchführung des Verfahrens nach einem der Ansprüche 1 - 8.

13. Bereitstellungsvorrichtung für das Computerprogrammprodukt nach Anspruch 12, wobei die Bereitstellungsvorrichtung das Computerprogrammprodukt speichert und/oder bereitstellt.
